## Europäisches Patentamt
## European Patent Office
## Office européen des brevets

(19)

(11) Numéro de publication : **0 046 419**
**B1**

(12) **FASCICULE DE BREVET EUROPÉEN**

(45) Date de publication du fascicule du brevet :
**17.10.84**

(51) Int. Cl.³ : **B 01 D 11/04**

(21) Numéro de dépôt : **81401102.9**

(22) Date de dépôt : **08.07.81**

(54) **Colonne pulsée avec décanteur intermédiaire.**

(30) Priorité : **18.07.80 FR 8015922**

(43) Date de publication de la demande :
**24.02.82 Bulletin 82/08**

(45) Mention de la délivrance du brevet :
**17.10.84 Bulletin 84/42**

(84) Etats contractants désignés :
**BE DE GB**

(56) Documents cités :
**DE-A- 2 502 414**
**US-A- 2 689 874**
**US-A- 2 808 318**

(73) Titulaire : **COMMISSARIAT A L'ENERGIE ATOMIQUE
Etablissement de Caractère Scientifique Technique
et Industriel
B.P. 510
F-75752 Paris Cedex 15 (FR)**

(72) Inventeur : **Faugeras, Pierre
Villa 10 Monplaisir
F-30130 Pont Saint-Esprit (FR)**
Inventeur : **Henry, Edouard
Villa 5 Monplaisir
F-30130 Pont Saint-Esprit (FR)**

(74) Mandataire : **Mongrédien, André et al
c/o BREVATOME 25, rue de Ponthieu
F-75008 Paris (FR)**

## Description

La présente invention a pour objet une colonne pulsée perfectionnée permettant un fonctionnement mixte, en phase lourde continue et en phase légère continue, dans la même colonne.

Les colonnes pulsées connues actuellement comportent généralement un décanteur supérieur muni d'une introduction de phase lourde et d'une sortie de phase légère et un décanteur inférieur muni d'une introduction de phase légère et d'une sortie de phase lourde.

La séparation des phases et le positionnement de l'interphase se font dans l'un ou l'autre des décanteurs suivant que l'on travaille en phase lourde continue ou en phase légère continue.

Dans tous les cas, ceci ne permet de réaliser qu'une seule opération par colonne, par exemple lavage seul ou extraction seule, ou encore, à la rigueur, extraction et lavage superposés mais dans une seule et même phase continue.

Or, pour de nombreuses applications, on est obligé de changer de milieu continu d'une opération à l'autre, par exemple extraction en phase lourde continue et lavage en phase légère continue : ceci oblige à utiliser deux colonnes distinctes, ce qui nécessite deux systèmes de pulsation et augmente notablement le coût des installations.

La présente invention a justement pour objet une colonne pulsée qui remédie à ces inconvénients, grâce à un décanteur intermédiaire qui permet de travailler successivement en phase lourde continue et en phase légère continue dans une seule et même colonne.

Selon la principale caractéristique de la colonne pulsée objet de l'invention, celle-ci comprend dans sa partie centrale un décanteur intermédiaire muni d'une introduction de phase lourde, ledit décanteur intermédiaire séparant la colonne en une partie haute et une partie basse dont les diamètres et les longueurs peuvent être différents, la régulation d'interphase se faisant dans ledit décanteur intermédiaire, permettant ainsi de travailler en phase lourde continue dans la partie basse et en phase légère continue dans la partie haute.

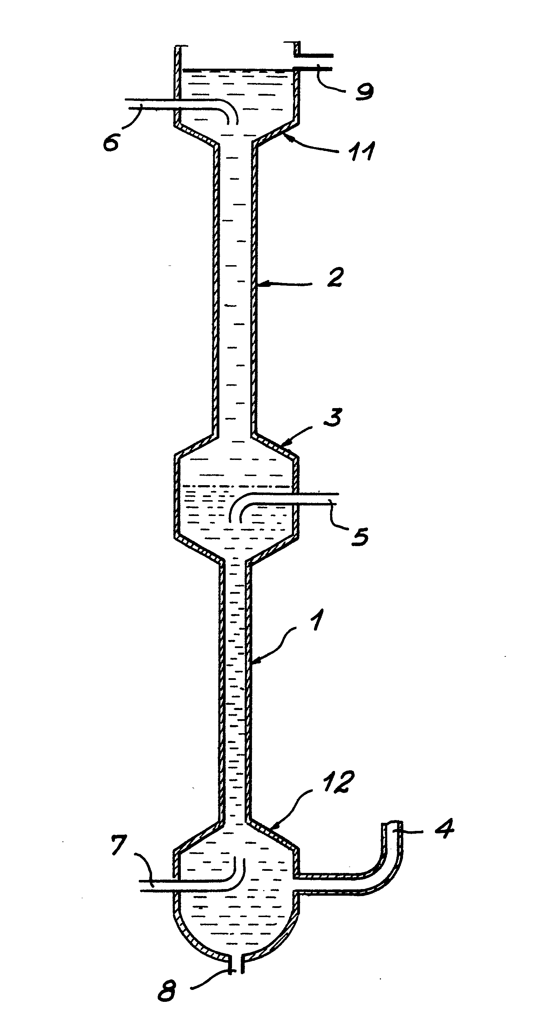

L'invention apparaîtra plus clairement à la lecture de la description qui va suivre, donnée à titre purement illustratif et nullement limitatif, à l'aide du dessin annexé, lequel comporte une figure unique représentant une vue schématique en coupe verticale de la colonne pulsée objet de l'invention.

Sur la figure, on voit que la colonne comporte, de façon classique, un décanteur supérieur 11 avec une introduction de phase lourde 6 et une sortie de phase légère 9, tandis que le décanteur inférieur 12 est muni d'une introduction de phase légère 7 et d'une sortie de phase lourde 8. Une conduite 4 relie le décanteur inférieur 12 à un système de pulsation (non représenté).

De plus, la colonne comporte dans sa partie centrale un décanteur intermédiaire 3, muni d'une introduction de phase lourde 5, qui sépare la colonne en une partie haute 2 et une partie basse 1.

La régulation d'interphase dans le décanteur intermédiaire 3 se fait par des systèmes classiques, de même que la pulsation en bas de colonne.

Un tel dispositif permet de réaliser deux opérations successives d'extraction et de lavage dans deux milieux continus différents sans changer de colonne. Par exemple, on introduit en 5 une phase lourde contenant une substance à extraire tandis qu'en 7 est introduite une phase légère qui doit entraîner ladite substance : dans la partie basse 1 de la colonne, c'est la phase lourde qui est continue tandis que la phase légère est dispersée. Celle-ci monte depuis le décanteur inférieur 12 jusqu'au décanteur intermédiaire 3, mais à partir de là, c'est elle qui est continue dans la partie haute 2 de la colonne. C'est dans la partie haute qu'a lieu le lavage de la phase légère et l'élimination des impuretés qu'elles pourrait contenir.

Pour ce faire, on introduit en 6 une autre phase lourde qui descend le long de la colonne en entraînant avec elle les impuretés.

A titre d'essai, on a réalisé un prototype d'une telle colonne : la partie basse a un diamètre de 25 mm et une hauteur de 4 m, tandis que la partie haute a un diamètre de 50 mm et une hauteur de 2 m.

Cette colonne a été utilisée pour purifier de l'acide phosphorique. La solution contenant celui-ci (phase lourde) est introduite en 5 et descend le long de la partie basse 1 de la colonne, tandis qu'en 7 est introduit de l'isobutanol (phase légère) : l'acide phosphorique passe dans l'isobutanol où il se dissout, mais des impuretés sont entraînées avec l'acide. Pour les éliminer, on introduit en 6 une autre phase lourde, en l'occurrence une solution de soude diluée. Celle-ci entraîne les impuretés (fer, magnésium, aluminium) qui sont évacuées en bas de colonne, tandis que l'isobutanol chargé d'acide phosphorique propre est évacué par la sortie 9.

Le dispositif a fonctionné plusieurs jours consécutifs et on a pu vérifier qu'une telle colonne était aussi efficace que deux colonnes distinctes placées en série.

Une telle colonne pulsée présente des avantages importants. Tout d'abord, elle permet d'économiser un pulseur puisqu'on peut faire deux opérations différentes en changeant de milieu continu dans une seule colonne : les installations sont donc moins encombrantes et moins coûteuses. De plus, il n'est pas nécessaire d'utiliser des systèmes particuliers pour la régulation d'interphase et la pulsation : les moyens classiques connus peuvent très bien être utilisés, par exemple, régulation d'interphase par bullage pneumatique et pulsation par les moyens habituels mécaniques ou pneumatiques.

Une précaution est cependant à prendre si les deux opérations effectuées dans la colonne nécessitent des produits amplitude-fréquence différents : il faut en tenir compte lors de la conception de la colonne, suivant les applications envisagées, car dans ce cas, les parties haute et basse auront les diamètres différents, le plus petit diamètre correspondant au plus fort produit amplitude-fréquence.

Les applications sont nombreuses et variées, même dans les cas où l'extraction ou le lavage se fait par étapes successives. Pour cela, le procédé habituel constiste à recycler la phase lourde d'une colonne aval dans la colonne amont, tandis que la phase légère de la colonne amont est envoyée dans la colonne aval.

Grâce à l'invention, on peut réaliser deux étapes en une seule fois puisque la phase légère reste dans la même colonne, tandis que la phase lourde recueillie en 8 sous forme de phase continue, peut être recyclée en 6 sous forme de phase dispersée.

## Revendication

Colonne pulsée, du genre de celles qui comportent, de façon connue, un décanteur supérieur muni d'une introduction de phase lourde et d'une sortie de phase légère et un décanteur inférieur muni d'une introduction de phase légère et d'une sortie de phase lourde, ledit décanteur inférieur étant relié à un système de pulsation, la phase lourde et la phase légère circulant à contre-courant l'une de l'autre, caractérisée en ce qu'elle comprend en outre, dans sa partie centrale, un décanteur intermédiaire (3) muni d'une introduction de phase lourde (5), ledit décanteur intermédiaire (3) séparant la colonne en une partie haute (2) et une partie basse (1) dont les diamètres et les longueurs peuvent être différents, la régulation d'interphase se faisant dans ledit décanteur intermédiaire (3), permettant ainsi de travailler en phase lourde continue dans la partie basse (1) et en phase légère continue dans la partie haute (2).

## Claim

Pulsed column of the type comprising, in known manner, an upper decanter having an inlet for heavy phase and an outlet for light phase, and a lower decanter having an inlet for light phase and an outlet for heavy phase, said lower decanter being connected to a pulsation system, the heavy and light phases circulating in countercurrent to one another, characterized in that it additionally comprises, at its middle, an intermediate decanter (3) having an inlet (5) for heavy phase, said intermediate decanter (3) dividing the column into an upper portion (2) and a lower portion (1) whose diameters and lengths may be different, the interface being controlled within said intermediate decanter (3), thereby permitting working with a continuous heavy phase in the lower portion (1) and a continuous light phase in the upper portion (2).

## Anspruch

Pulsationskolonne, die in bekannter Weise einen mit einer Einlaßöffnung für eine schwere und einer Auslaßöffnung für eine leichte Phase versehenen, oberen, und einen mit einer Einlassöffnung für eine leichte und einer Auslassöffnung für eine schwere Phase versehenen, unteren Dekantierer enthält, wobei dieser mit einem Pulsationssystem verbunden ist und leichte und schwere Phase im Gegenstrom zueinander geführt werden, dadurch gekennzeichnet, daß die Pulsationskolonne in ihrem Mittelteil ferner einen mit einer Einlaßöffnung (5) für eine schwere Phase versehenen, zwischenliegenden Dekantierer (3) aufweist, der die Kolonne in einen oberen (2) und einen unteren Abschnitt (1) aufteilt, deren Durchmesser und Länge unterschiedlich sein können, wobei die Einstellung der Phasengrenze in dem zwischenliegenden Dekantierer (3) erfolgt und es daher ermöglicht wird, im unteren Abschnitt (1) in einer schweren und im oberen Abschnitt (2) in einer leichten kontinuierlichen Phase zu arbeiten.